# EUROPÄISCHE PATENTANMELDUNG

(11) **EP 1 292 000 A2**
(43) Veröffentlichungstag der Anmeldung: **12.03.2003**
(21) Anmeldenummer: 02018680.5
(22) Anmeldetag: 21.08.2002
(51) Int. Cl.: H02J 7/35, H02J 7/00

(54) **Schaltungsanordnung für zumindest einen Solargenerator**

(30) Priorität: 05.09.2001 DE 10143446
(71) Anmelder: AUDI AG, 85045 Ingolstadt (DE)
(72) Erfinder: Schneider, Gerhard, 85092 Kösching (DE)
(74) Vertreter: Thielmann, Frank

(57) **Zusammenfassung**

Bei einer Schaltungsanordnung (1) für zumindest einen Solargenerator (2), einen Gebläsemotor (4) und Gebläseelektronik (5) mit Gebläseregler und eine aufladbare Energiequelle (3), insbesondere eine Batterie, zum Laden der Energiequelle (3) durch einen Teil der von dem Solargenerator (2) abgegebenen Energie, ist die Motorinduktivität (16) des Gebläsemotors (4) als Induktivität eines Wandlers für den Ladevorgang verwendbar und/oder verwendet.

## Beschreibung

Die Erfindung betrifft eine Schaltungsanordnung für zumindest einen Solargenerator, einen Gebläsemotor und Gebläseelektronik mit Gebläseregler und eine aufladbare Energiequelle, insbesondere eine Batterie, zum Laden der Energiequelle durch einen Teil der von dem Solargenerator abgegebenen Energie.

Schaltungsanordnungen für Solargeneratoren sind bekannt. Solargeneratoren werden beispielsweise für Solarschiebedächer verwendet, ein Aufbau von Scheiben dafür ist in den DE 41 05 389 C1 und DE 41 05 396 A1 beschrieben. Schaltungsanordnungen für Solargeneratoren werden zum Laden einer Energiequelle verwendet, wie dies beispielsweise in der DE 36 10 767 A1 und DE 199 03 769 A1 beschrieben ist.

Aus der DE 36 10 767 A1 geht eine Schaltungsanordnung zum wechselweisen Betrieb eines Belüftungsgebläses und zum Laden eines Akkumulators in einem Kraftfahrzeug hervor, wobei zumindest zwei Solarzelleneinheiten zusammen mit einer Umschalteinheit verwendet werden. In einer ersten Schaltstellung sind die Solarzelleneinheiten in Reihe geschaltet und mit dem Akkumulator verbunden, wohingegen in der zweiten Schaltstellung die Solarzelleneinheiten parallel geschaltet und mit dem Belüftungsgebläse verbunden sind. Für den Umschaltvorgang werden Schalter durch ein Schaltrelais, das über einen Zündschlüsselschalter und einen parallelen Schalter eines Thermostaten aktivierbar ist, in die gewünschte Position gebacht.

Gemäß der DE 199 03 769 A1 wird bei einem Verfahren zum Standklimatisieren eines Kraftfahrzeugs mittels einer Klimaanlage unter Nutzen von Solarenergie, die über zumindest ein Solarmodul gewonnen wird, das insbesondere am Kraftfahrzeugdach angebracht ist, und zum Auflagen einer Batterie des Kraftfahrzeugs von dem Solarmodul primär die Batterie vollgeladen. Diese dient einem kurzzeitigen Betrieb der Klimaanlage. Gleichzeitig zur Batterieladung wird eine Standlüftungsanlage mit einem Teil des von dem Solarmodul erzeugten Stroms versorgt. In der hierfür vorgesehenen Schaltung wird der Pluspol des Solarmoduls über eine Energieverteilungsschaltung mit Energieabnehmern und mit der Batterie verbunden. Unter Energieabnehmern werden hierbei die Standlüftungsanlage und die Klimaanlage verstanden. Die Verbindung der Batterie mit der Standlüftungsanlage und/oder Klimaanlage wird bei einer Batterieunterspannung getrennt.

Im Stand der Technik ist es außerdem bekannt, eine Umschaltung zwischen Batterieladung und Solarlüftung mit Hilfe eines separaten Schalters vorzusehen. Eine solche Schaltungsanordnung ist in der DE 197 08 368 A1 offenbart. Ein manuell betätigbarer Schalter zum Umschalten der Solarzellenstromzufuhr zum Gebläse bzw. zu dem Akkumulator des Kraftfahrzeugs ist darin alternativ zu einer automatischen Steuerung nach Maßgabe der Temperatur in dem Innenraum des Fahrzeugs und/oder des Akkumulatorladezustandes beschrieben. Es kann somit eine automatische oder halbautomatische Betriebsart gewählt werden.

Hierneben ist aus dem Stand der Technik ebenfalls bekannt, eine Anpassung der Solarmodulkennlinie auf die Gebläsemotorkennlinie vorzunehmen, wie beispielsweise in den DE 196 18 881 A1 und DE 196 18 882 A1 beschrieben. In beiden Fällen wird eine Schaltungsanordnung zur Stromversorgung wenigstens eines Verbrauchers mittels Solargenerators, insbesondere eines Gebläses oder Akkumulators, in einem Fahrzeug mit einer Impedanzanpassung zwischen Solargenerator und einem Gleichspannungswandler (DC/DC-Wandler) für zumindest einen Verbraucher, offenbart. Der Gleichspannungswandler ist mit einem Schalter zum wechselweisen Öffnen bzw. Schließen mittels eines pulsbreitenmodulierten Stellsignals versehen.

Als Halbleiterschalter sind MOSFET-Tansistoren offenbart. Der Pulsbreitenmodulator wird zum Ansteuern der Transistoren verwendet, wobei ein im Längszweig zwischen Eingang und Ausgang des Gleichspannungswandlers liegender Schalttransistor und ein in dem Querzweig liegender Freilauftransistor vorgesehen ist. Der Gleichspannungswandler regelt nur die Eingangsspannung. Außerdem ist eine Überbrückung des Gleichspannungswandlers durch ein Regelglied beschrieben, wobei die Pulsbreite des den Schalttransistor steuernden Signals auf 100 % gesetzt und die Freilaufstufe bzw. der Freilauftransistor gesperrt wird. Gemäß der DE 196 18 882 A1 ist der Gleichspannungswandler als pulsbreitenmodulierter Abwärtswandler ausgebildet.

Der Nachteil der im Vorstehenden beschriebenen Lösungen ist, dass die darin beschriebenen Gleichspannungswandler verhältnismäßig teuer sind.

Der vorliegenden Erfindung liegt daher die Aufgabe zugrunde, eine Schaltungsanordnung nach dem Oberbegriff des Anspruchs 1 dahingehend weiterzubilden, dass eine Kostenreduzierung gegenüber den Lösungen des Standes der Technik, insbesondere unter Bezug auf die separaten Gleichspannungswandler (DC/DC-Wandler) herbeigeführt wird.

Die Aufgabe wird für eine Schaltungsanordnung nach dem Oberbegriff Anspruchs 1 dadurch gelöst, dass die Motorinduktivität des Gebläsemotors als Induktivität eines Wandlers für den Ladevorgang verwendbar und/oder verwendet ist.

Dadurch wird eine Schaltungsanordnung für zumindest einen Solargenerator, eine Klimaanlage und eine aufladbare Energiequelle geschaffen, die eine erhebliche Kostenreduzierung gegenüber einer separaten Solarelektronik mit Gleichspannungswandler im Solardach sowie ebenfalls eine erhebliche Kostenreduzierung gegenüber einem separaten Gleichspannungswandler (DC/DC-Wandler) oder einer "Charge Pump" im Gebläseregler ermöglicht. Dadurch, dass die Motorinduktivität des Gebläsemotors als Induktivität des Wandlers, insbesondere Aufwärtswandlers für den Ladevorgang mit verwendet wird, kann nämlich der separate Gleichspannungswandler zusammen mit einer separaten Solarelektronik entfallen. Alleinig wird vorzugsweise die Gebläseelektronik verwendet, die entsprechend angepasst und ggf. durch weitere elektronische Elemente erweitert wird. Bevorzugt wird als Klimagebläseregler kein linearer, sondern ein getakteter Gebläseregler verwendet, der den Gebläsemotor steuert. Bevorzugt ist daher zumindest der Wandler in dem Gebläseregler, insbesondere getakteten Gebläseregler integrierbar oder integriert. Hierdurch kann der bislang in einem Solardach installierte Gleichspannungsregler mit einer Schaltungsanordnung, wie sie beispielsweise in DE 196 18 882 und DE 196 18 881 offenbart ist, entfallen, da eine Anpassung der Solarkennlinie auf die Kennlinie des Gebläsemotors im Gebläseregler umgesetzt werden kann. Hieraus ergibt sich auch der Vorteil, dass ein optimales Leistungstracking umgesetzt werden kann.

Bevorzugt ist die von dem Solargenerator abgegebene Energie zur Ruhestromkompensation eines oder mehrerer Verbraucher verwendbar oder wird verwendet. Eine Ruhestromkompensation ist im gesamten Stand der Technik nicht offenbart, stellt jedoch eine Möglichkeit dar, um den durch die zunehmende Ausstattung von Fahrzeugen mit Elektronik steigenden Ruhestromverbrauch eines Fahrzeugs abzufangen. Durch diesen erhöhten Ruhestromverbrauch kommt es immer wieder zu dem Liegenbleiben eines vor allen hoch ausgestatteten Fahrzeugs. Durch Vorsehen der Ruhestromkompensation wird vorteilhaft zugleich eine hohe Stromkompensation zur Verringerung des Liegenbleiberpotentials und zur Erhöhung der Lebensdauer einer aufladbaren Energiequelle des Fahrzeugs vorgesehen.

Vorzugsweise ist eine Trenn- und/oder Umschalteinrichtung, insbesondere ein Relais oder ein funktionsentsprechendes Halbleiterbauelement, zum Anschließen des zumindest einen Solargenerators an der Gebläseelektronik vorgesehen. Eine solche Trenn- und/oder Umschalteinrichtung, insbesondere ein Relais, realisiert vorteilhaft zusätzlich noch einen Verpolungsschutz und reduziert den Ruhestrom. Bevorzugt wird der Solargenerator an einem "Öffner" der Trenn- und/oder Umschalteinrichtung angeschlossen.

Vorzugsweise ist für den Ladevorgang ein erster Freilaufkreis für den Normalbetrieb abschaltbar und ein zweiter Freilaufkreis über die aufladbare Energiequelle einschaltbar. Hierdurch ist vorteilhaft unabhängig von der Solarspannung stets eine Ladung der aufladbaren Energiequelle, insbesondere einer Batterie oder eines Akkumulators, jederzeit möglich. Die leichte Abund Umschaltbarkeit zwischen den beiden Freilaufkreisen ergibt sich aus der vorteilhaften Verwendung der Motorinduktivität als Wandler für die Ladung der Energiequelle. Bevorzugt ist die der aufladbaren Energiequelle zuführbare Gesamtladung insbesondere durch geeignete Programmierung einstellbar. Die von dem Solargenerator erzeugte Energie kann der Ruhestromkompensation dienen, die aufladbare Energiequelle im Stillstand aktiv laden, oder der Solargenerator kann abgeschaltet werden.

Zum Abstimmen einer optimalen Ladung der aufladbaren Energiequelle ist besonders bevorzugt eine Ladezustandserfassungseinheit für die aufladbare Energiequelle, eine Kühlleistungsberechnungseinheit und der Gebläseregler der Klimaanlage an einen mit einer zentralen Netzversorgung verbindbaren oder verbundenen Signalbus anschließbar. Ein solcher Signalbus kann ein sogenannter "Klimabus" sein. An diesen kann ein getakteter Gebläseregler und dadurch über diesen sowie ein Klimabedienteil an der zentralen Netzversorgung, insbesondere ein Bordnetz eines Fahrzeugs, angeschlossen werden. Eine Ladezustandserfassungseinheit für die aufladbare Energiequelle kann beispielsweise ein Batteriemanager sein. Dieser bestimmt den aktuellen Ladezustand einer Batterie bzw. ganz allgemein der aufladbaren Energiequelle und legt diese Daten auf dem Signalbus oder "Klimabus" ab. Hierüber werden sie ebenso wie die Daten über die aktuelle Kühlleistung des Fahrzeugs, die von der Kühlleistungsberechnungseinheit der Klimaanlage zur Verfügung gestellt werden, dem Gebläseregler zugeführt. Hierdurch wird eine optimale Ladung der aufladbaren Energiequelle, insbesondere Batterie, ohne große Einbußen in der Belüftung, beispielsweise eines Fahrzeugs, durchführbar.

Vorzugsweise ist die Lademenge durch zyklisches Umschalten des zweiten Freilaufkreises erzeugbar. In Abhängigkeit von der Periodendauer stellt sich beim zyklischen Umschalten ein jeweiliger mittlerer Ladestrom ein. Vorzugsweise erfolgt das Umschalten von dem ersten auf den zweiten Freilaufkreis automatisch in Abhängigkeit von dem Ladezustand der aufladbaren Energiequelle und/oder manuell durch Betätigen einer Aktivierungseinrichtung. Bei Vorsehen einer automatischen Umschaltung wird diese insbesondere dann aktiviert, wenn die Ladezustandserfassungseinheit für die aufladbare Energiequelle feststellt, dass deren Ladezustand unzureichend ist. Sodann wird der Ladevorgang der Energiequelle eingeleitet, um die hohe Stromkompensation sicherstellen zu können. Zusätzlich oder alternativ kann eine manuelle Umschaltung erfolgen durch Betätigen einer Aktivierungseinrichtung, insbesondere eines Schalters, Tasters oder dergleichen. Beispielsweise kann manuell umgeschaltet werden, wenn ein Fahrzeug oder dergleichen, in dem die Schaltungsanordnung integriert ist, längere Zeit abgestellt werden soll, damit keine vollständige Entladung beispielsweise der Fahrzeugbatterie zu befürchten ist. Auch bei Fahrzeugen, die lediglich im Kurzstreckenbereich bewegt werden, jedoch hoch ausgestattet sind, kann es sinnvoll sein, regelmäßig von dem ersten Freilaufkreis für den Normalbetrieb auf den zweiten Freilaufkreis über die aufladbare Energiequelle umzuschalten.

Bevorzugt nimmt der Gebläseregler eine Istwert-Regelung der Spannung der aufladbaren Energiequelle zum Verhindern von deren Überladung vor. Anders ausgedrückt überwacht der Gebläseregler somit die aktuelle Spannung der aufladbaren Energiequelle, um deren Überladung zu verhindern und schaltet gegebenenfalls wieder auf den ersten Freilaufkreis für Normalbetrieb zurück.

Bevorzugt ist der zumindest eine Solargenerator Teil eines Solarschiebedaches, insbesondere eines Fahrzeugs. Die Gebläseelektronik der Klimaanlage weist vorzugsweise eine Steuereinheit und die Elemente für den Ladevorgang der aufladbaren Energiequelle, insbesondere den Wandler, auf. Die Steuereinheit kann dabei die eigentliche Gebläseelektronik darstellen, die durch die Elemente des Wandlers und der Umschalteinrichtung ergänzt wird.

Zur Bedienung der Schaltungsanordnung ist vorzugsweise ein Schalter vorgesehen, der insbesondere auch in ein MMI (Mensch-Maschine-Interface) integriert sein, also elektronisch menügeführt erfolgen kann. Auch das Umschalten von dem ersten in den zweiten Freilaufkreis kann über das MMI als Aktivierungseinrichtung erfolgen. Durch die Integration in ein MMI kann die Anzahl der Schalter in einer Fahrzeugkonsole reduziert werden.

Zur näheren Erläuterung der Erfindung wird im folgenden ein Ausführungsbeispiel anhand der Zeichnung näher beschrieben. Diese zeigt in:

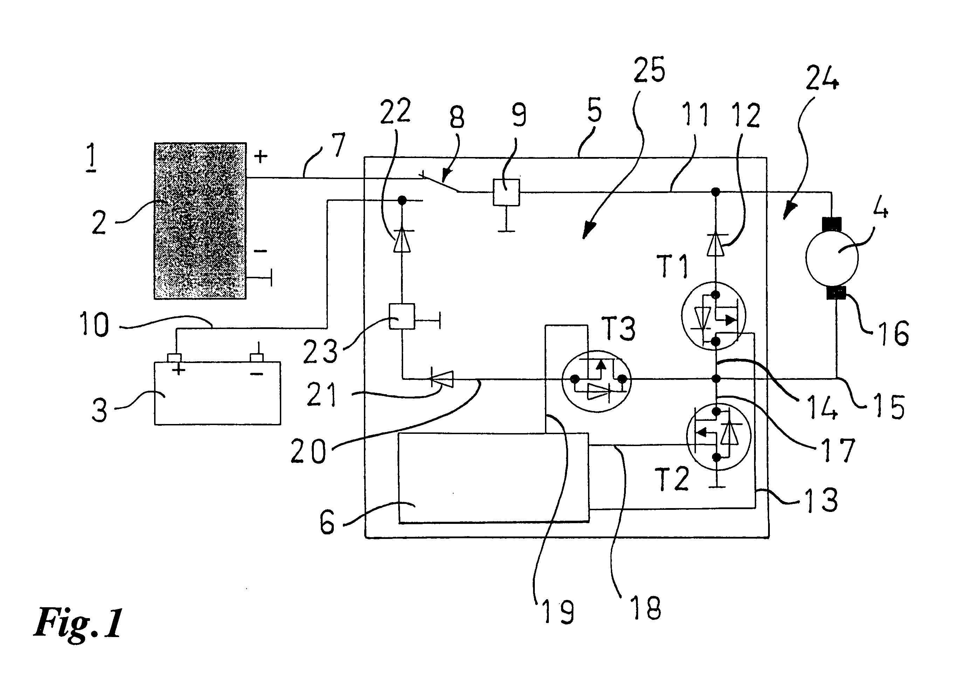

- Figur 1: eine Prinzipskizze einer ersten Ausführungsform einer erfindungsgemäßen Schaltungsanordnung.

Figur 1 zeigt eine erste Ausführungsform einer erfindungsgemäßen Schaltungsanordnung 1. Diese umfasst einen Solargenerator 2, beispielsweise eines Solardachs, eine Batterie 3 als aufladbare Energiequelle, einen Gebläsemotor 4 einer Klimaanlage mit einer Gebläseelektronik 5, wobei die Gebläseelektronik eine Steuereinheit 6 aufweist. Der Pluspol des Solargenerators 2 ist über eine Leitung 7 auf einen Schalter 8 gelegt. Anstelle des Schalters kann ein Relais oder eine andere Trenn- und/oder Umschalteinrichtung verwendet werden. Der Schalter 8 kann entweder die Leitung 7, somit den Pluspol des Solargenerators mit dem Gebläsemotor 4 über einen Filter 9 und eine Leitung 11 verbinden oder den Pluspol der Batterie 3 über eine Leitung 10 ebenfalls mit dem Gebläsemotor über dieselbe Leitung 11.

Parallel zu dem Gebläsemotor sind ein Transistor T1 sowie eine Freilaufdiode 12 angeordnet. Gateseitig ist der Transistor T1 über eine Leitung 13 mit der Steuerelektronik 6 verbunden. Drainseitig ist der Transistor T1 über eine Leitung 14 und eine Leitung 15 mit dem Gebläsemotor bzw. dessen Induktivität 16 verbunden, sourceseitig über die Diode 12 mit der Leitung 11.

Die von der Motorinduktivität 16 in die Gebläseelektronik hineingehende Leitung 15 ist außerdem mit einem zweiten Transistor T2 Drainseitig über eine weitere Leitung 17 verbunden. Sourceseitig liegt der Transistor T2 auf Masse. Gateseitig ist der Transistor T2 ebenfalls mit der Steuerelektronik 6 über eine Leitung 18 verbunden.

Die Motorinduktivität 16 ist außerdem über die Leitung 15 mit einem Transistor T3 drainseitig verbunden. Dieser ist gateseitig über eine Leitung 19 wiederum mit der Steuerelektronik 6 verbunden. Sourceseitig ist der Transistor T3 mit der von dem Pluspol der Batterie 3 kommenden Leitung 10 über eine Leitung 20 verbunden. Auf diesem Verbindungsweg sind zwei weitere Dioden 21, 22 sowie ein weiterer Filter 23 vorgesehen. Beide Filter 9, 23 liegen ansonsten jeweils auf Masse.

Wird nun von dem Solargenerator 2 Energie erzeugt, wird diese bei der in Figur 1 dargestellten Schalterstellung des Schalters 8 zu dem Gebläsemotor 4 befördert. Im Normalbetrieb werden zum Berieb des Gebläsemotors 4, also z.B. zum Kühlen eines Fahrzeuginnenraums, die Transistoren von der Steuerelektronik 6 so angesteuert, dass der Strom über den Gebläsemotor fließt. Im Normalbetrieb wird der Transistor T2 getaktet. Teilweise kann er fest auf Masse geschaltet werden. Dies geschieht, um die Motorlast an den Solargenerator anzupassen. Für die Schaltung eines ersten Freilaufkreises 24 wird ein Kreis über den Gebläsemotor 4, den Transistor T1 und die Freilaufdiode 12 geschlossen. Grundsätzlich können derartige Motorfreilaufkreise bei getakteten Anwendungen vorteilhaft vorgesehen werden. Der Transistor T1 dient vorliegend zusätzlich zum Abschalten des Freilaufkreises 24.

Soll nun die Batterie 3 geladen werden, wird zunächst einmal Strom von dem Pluspol des Solargenerators 2 über die Leitungen 7 und 11 sowie den Schalter 8 und den Filter 9 zu dem Gebläsemotor 4 geleitet. Bei ausgeschalteter Zündung bleibt der Schalter 8 auf der Leitung 7. Wird keine Solarladung benötigt, erfolgt der Freilauf der Motorenergie über den Transistor T1 und die Diode 12. Ist das Laden der Batterie erwünscht, wird die Motorenergie über die Fahrzeugbatterie geführt. Hierzu wird der erste Freilaufkreis 24 durch den Transistor T1 abgeschaltet. Zugleich wird ein zweiter Freilaufkreis 25 über die Batterie über den Transistor T3 geschlossen, der durch die Leitungen 10, 11 über den Gebläsemotor 4 und die Leitungen 15 und 20 sowie die darin enthaltenen Elemente des Transistors T3, der beiden Dioden 21 und 22 und des Filters 23 gebildet wird. Die Diode 21 und der Filter 23 dienen der Reduzierung der Störabstrahlung. Das Prinzip der Ladung über die Umschaltung der Freilaufkreise funktioniert auch ohne diese Elemente 21 und 23. Die Diode 22 ist hingegen für die Funktionsfähigkeit relevant.

Ein Aufwärtswandler oder Spannungswandler wird durch den Gebläsemotor 4, die Induktivität 16 des Gebläsemotors, wobei die Elemente 4 und 16 den eigentlichen Gebläsemotor bilden, den Transistor T2 und die Diode 22 mit Hilfe der Batterie gebildet. Der Spannungswandler ist als Taktwandler aufgebaut.

Die beiden Filter 9 und 23 sind als Speicher und Filterelement zum Herausfiltern hoher Frequenzen vorgesehen, damit diese sich nicht störend auf die Batterie bzw. die weiteren Verbraucher auswirken. Die hohen Frequenzen entstehen durch die zahlreichen Schaltvorgänge der Transistoren zum Erzeugen der erforderlichen Ladungsmenge bzw. Spannung zum Speisen der Batterie. Beispielsweise können Elektrolytkondensatoren und insbesondere zusätzlich auch Spulen verwendet werden.

Neben dem vorstehend beschriebenen Ausführungsbeispiel einer Schaltungsanordnung für zumindest einen Solargenerator, einen Gebläsemotor und eine aufladbare Energiequelle sind noch weitere Ausführungsformen möglich, die jeweils die Motorinduktivität des Gebläsemotors als Induktivität eines Wandlers für den Ladevorgang der Energiequelle verwenden. Der Gebläsemotor kann hierfür auch unabhängig von der Verwendung in einer Klimaanlage vorgesehen und für die Schaltungsanordnung genutzt werden. Eine andere verwendbare Motorbauform ist beispielsweise ein EC-Motor, also ein bürstenloser Gleichstrommotor, bei dem das Umschalten der Wicklungen elektronisch erfolgt. Da im allgemeinen auch während des Batterielademodus Strom durch den Motor fließt, dreht sich dieser geringfügig, was im jeweiligen Anwendungs- oder Verwendungsfall berücksichtigt werden sollte.

### BEZUGSZEICHENLISTE

- 1: Schaltungsanordnung
- 2: Solargenerator
- 3: Batterie
- 4: Gebläsemotor
- 5: Gebläseelektronik
- 6: Steuereinheit
- 7: Leitung
- 8: Schalter
- 9: Filter
- 10: Leitung
- 11: Leitung
- 12: Freilaufdiode
- 13: Leitung
- 14: Leitung
- 15: Leitung
- 16: Induktivität
- 17: Leitung
- 18: Leitung
- 19: Leitung
- 20: Leitung
- 21: Diode
- 22: Diode
- 23: Filter
- 24: erster Freilaufkreis
- 25: zweiter Freilaufkreis
- T1: Transistor
- T2: Transistor
- T3: Transistor

## Patentansprüche

1. Schaltungsanordnung (1) für zumindest einen Solargenerator (2), einen Gebläsemotor (4) und Gebläseelektronik (5) mit Gebläseregler und eine aufladbare Energiequelle (3), insbesondere eine Batterie, zum Laden der Energiequelle (3) durch einen Teil der von dem Solargenerator (2) abgegebenen Energie,
**dadurch gekennzeichnet, dass**
die Motorinduktivität (16) des Gebläsemotors (4) als Induktivität eines Wandlers für den Ladevorgang verwendbar und/oder verwendet ist.

2. Schaltungsanordnung (1) nach Anspruch 1,
**dadurch gekennzeichnet, dass**
die von dem Solargenerator (2) abgegebene Energie zur Ruhestromkompensation eines oder mehrerer Verbraucher verwendbar ist oder verwendet wird.

3. Schaltungsanordnung (1) nach Anspruch 1 oder 2,
**dadurch gekennzeichnet, dass**
zumindest der Wandler, insbesondere ein Aufwärtswandler, in dem Gebläseregler, insbesondere getakteten Gebläseregler integrierbar oder integriert ist.

4. Schaltungsanordnung (1) nach einem der vorstehenden Ansprüche,
**dadurch gekennzeichnet, dass**
eine Trenn- und/oder Umschalteinrichtung (8), insbesondere ein Relais oder ein funktionsentsprechendes Halbleiter-Bauelement, zum Anschließen des zumindest einen Solargenerators (2) an der Gebläseelektronik (5) vorgesehen ist.

5. Schaltungsanordnung (1) nach einem der vorstehenden Ansprüche,
**dadurch gekennzeichnet, dass**
für den Ladevorgang ein erster Freilaufkreis (23) für den Normalbetrieb abschaltbar und ein zweiter Freilaufkreis (24) über die aufladbare Energiequelle (3) einschaltbar ist.

6. Schaltungsanordnung (1) nach einem der vorstehenden Ansprüche,
**dadurch gekennzeichnet, dass**
die der aufladbaren Energiequelle (3) zuführbare Gesamtladung insbesondere durch geeignete Programmierung einstellbar ist.

7. Schaltungsanordnung (1) nach einem der vorstehenden Ansprüche,
**dadurch gekennzeichnet, dass**
zum Abstimmen einer optimalen Ladung der aufladbaren Energiequelle (3) eine Ladezustandserfassungseinheit für die aufladbare Energiequelle, eine Kühlleistungsberechnungseinheit und der Gebläseregler an einen mit einer zentralen Netzversorgung verbindbaren oder verbundenen Signalbus anschließbar sind.

8. Schaltungsanordnung (1) nach einem der vorstehenden Ansprüche,
**dadurch gekennzeichnet, dass**
die Lademenge durch zyklisches Umschalten des zweiten Freilaufkreises (24) erzeugbar ist.

9. Schaltungsanordnung (1) nach Anspruch 8,
**dadurch gekennzeichnet, dass**
das Umschalten von dem ersten (23) auf den zweiten Freilaufkreis (24) automatisch in Abhängigkeit von dem Ladezustand der aufladbaren Energiequelle (3) und/oder manuell durch Betätigen einer Aktivierungseinrichtung erfolgt.

10. Schaltungsanordnung (1) nach einem der vorstehenden Ansprüche,
**dadurch gekennzeichnet, dass**
der Gebläseregler eine Istwert-Regelung der Spannung der aufladbaren Energiequelle (3) zum Verhindern von deren Überladung vornimmt.

11. Schaltungsanordnung (1) nach einem der vorstehenden Ansprüche,
**dadurch gekennzeichnet, dass**
der zumindest eine Solargenerator (2) Teil eines Solarschiebedaches insbesondere eines Fahrzeugs ist.

12. Schaltungsanordnung (1) nach einem der vorstehenden Ansprüche,
**dadurch gekennzeichnet, dass**
die Gebläseelektronik (5) eine Steuereinheit (6) und die Elemente (T1, T2, T3, 12, 21, 22) für den Ladevorgang der Energiequelle (3), insbesondere den Wandler (4, 16, T2, 22) aufweist.
